# EUROPEAN PATENT APPLICATION

(11) **EP 4 503 293 A1**
(43) Date of publication of application: **05.02.2025**
(21) Application number: 22934259.7
(22) Date of filing: 31.03.2022
(51) Int. Cl.: H01M 50/30, H01M 50/152

(54) **BATTERY CELL, BATTERY AND ELECTRIC DEVICE**

(71) Applicant: Contemporary Amperex Technology Co., Limited, Ningde, Fujian 352100 (CN)
(72) Inventor: DU, Xianglong, Ningde, Fujian 352100 (CN); JIN, Yikuang, Ningde, Fujian 352100 (CN); XU, Hu, Ningde, Fujian 352100 (CN); NIU, Shaojun, Ningde, Fujian 352100 (CN)
(74) Representative: Rowlands, Stuart Michael
(86) International application number: PCT/CN2022/084619
(87) International publication number: WO 2023/184422

(57) **Abstract**

Provided in the embodiments of the present application are a battery cell, a battery, and an electric device. The battery cell comprises: an end cover assembly, which comprises an end cover, an electrode terminal and a pressure relief mechanism, both the electrode terminal and the pressure relief mechanism being arranged on the end cover; an adapter, which is arranged on a side of the end cover facing the interior of the battery cell and comprises a first connection part, a second connection part and a third connection part sequentially folded in the thickness direction of the end cover, wherein the first connection part is used for connection to an electrode assembly, the third connection part is used for connection to the electrode terminal, and the second connection part connects the first connection part and the third connection part. The second connection part is provided with a first through hole, which is used for allowing a gas in the battery cell to pass through so that the gas can flow to the pressure relief mechanism. The battery cell has high safety.

## Description

### TECHNICAL FIELD

This application relates to the field of battery technologies, and in particular, to a battery cell, a battery, and an electric device.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technology is an important factor in connection with their development.

In the development of battery technology, in addition to battery energy density improvement, safety is another non-negligible issue. Therefore, how safety performance of batteries is enhanced is an urgent technical problem to be solved in battery technology.

### SUMMARY

This application is intended to provide a battery cell, a battery, and an electric device. The battery cell has high safety.

This application is implemented using the following technical solutions.

According to a first aspect, this application provides a battery cell including: an end cover assembly, including an end cover, an electrode terminal, and a pressure relief mechanism, where the electrode terminal and the pressure relief mechanism are both disposed at the end cover; and an adapter, disposed at a side of the end cover facing the interior of the battery cell, where the adapter includes a first connection portion, a second connection portion, and a third connection portion that are sequentially folded along a thickness direction of the end cover. The first connection portion is configured to be connected to an electrode assembly, the third connection portion is configured to be connected to the electrode terminal, and the second connection portion is connected to the first connection portion and the third connection portion, where the second connection portion is provided with a first through hole, and the first through hole is used for allowing gas inside the battery cell to pass through, so that the gas can flow to the pressure relief mechanism.

According to the battery cell of the embodiments of this application, when a large amount of gas is produced by an electrochemical reaction taking place in the electrode assembly, the gas moves towards the pressure relief mechanism under the action of internal pressure of the battery cell. Since the second connection portion is provided with the first through hole, the gas can pass through the second connection portion through the first through hole, reducing obstruction of the second connection portion to the gas and allowing the gas to smoothly flow towards the pressure relief mechanism, thereby facilitating timely pressure relief by the pressure relief mechanism, and in turn improving the safety of the battery cell.

According to some embodiments of this application, in the thickness direction, a projection of the pressure relief mechanism on the second connection portion covers at least part of the first through hole.

In the above solution, the projection of the pressure relief mechanism on the second connection portion covers at least part of the first through hole, so that the gas passing through the first through hole can quickly flow to the pressure relief mechanism, facilitating timely pressure relief by the pressure relief mechanism.

According to some embodiments of this application, the first connection portion is provided with a second through hole, and the second through hole is used for allowing gas inside the battery cell to pass through, so that the gas can flow to the first through hole.

In the above solution, the second through hole provided in the first connection portion facilitates passing of the gas produced by the electrochemical reaction in the electrode assembly through the first connection portion, reducing the obstruction of the first connection portion to the gas and improving the flowing smoothness of the gas.

According to some embodiments of this application, in the thickness direction, projections of the first through hole and second through hole on the end cover at least partially overlap.

In the above solution, the projections of the first through hole and second through hole on the end cover at least partially overlap, allowing the gas produced in the electrode assembly to quickly flow to the pressure relief mechanism.

According to some embodiments of this application, the first connection portion is further provided with a third through hole; the third through hole is used for allowing gas inside the battery cell to pass through, so that the gas can flow to the first through hole; and in the thickness direction, projections of the third through hole and first through hole do not overlap.

In the above solution, the third through hole provided in the first connection portion further reduces the obstruction of the first connection portion to the gas produced in the electrode assembly, improving the smoothness of the gas passing through the first connection portion and allowing the gas to quickly flow to the pressure relief mechanism.

According to some embodiments of this application, when the adapter is in an unfolded state, the third through hole and the second through hole are located at two ends of the first connection portion in a length direction of the adapter.

In the above solution, the third through hole and the second through hole are located at the two ends of the first connection portion in the length direction of the adapter, ensuring that the first connection portion is evenly stressed when the gas produced by the electrochemical reaction in the electrode assembly flows through the first connection portion.

According to some embodiments of this application, in the thickness direction, a projection of the first connection portion on the end cover is within a projection of the electrode assembly on the end cover.

In the above solution, the projection of the first connection portion on the end cover is within the projection of the electrode assembly on the end cover, so that the first connection portion does not shield an entire end surface, facilitating flowing of the gas produced in the electrode assembly to the pressure relief mechanism in a region where the first connection portion does not cover the end surface, thereby reducing the obstruction of the first connection portion to the gas.

According to some embodiments of this application, the first connection portion, the second connection portion, and the third connection portion are integrally formed.

In the above solution, the adapter is integrally formed, and the adapter is folded to form the first connection portion, the second connection portion, and the third connection portion, ensuring the overall strength of the adapter.

According to some embodiments of this application, the end cover assembly further includes a first insulating member. The first insulating member is disposed at a side of the end cover facing the interior of the battery cell; the first insulating member is configured to isolate the end cover from the adapter in an insulating manner; and the first insulating member is provided with a fourth through hole. In the thickness direction, a projection of the fourth through hole on the end cover at least partially overlaps with the pressure relief mechanism, and a projection of the fourth through hole on the second connection portion at least partially overlaps with the first through hole.

In the above solution, the first insulating member is disposed at the side of the end cover facing the interior of the battery cell so as to separate the end cover from the adapter, avoiding short circuit caused by contact between the end cover and the adapter, thereby improving the safety of the battery cell. The projection of the fourth through hole on the end cover at least partially overlaps with the pressure relief mechanism, and the projection of the fourth through hole on the second connection portion at least partially overlaps with the first through hole, facilitating smooth flowing of the gas towards the pressure relief mechanism.

According to a second aspect, this application provides a battery including the battery cell provided in the foregoing solution.

According to a third aspect, this application provides an electric device including the battery cell provided in the foregoing solution.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. It will be apparent that the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a partial cross-sectional view of a battery cell according to some embodiments of this application;
FIG. 5 is a schematic diagram of a connection state of an end cover assembly and an adapter according to some embodiments of this application;
FIG. 6 is a schematic diagram of assembly of an end cover assembly and an adapter according to some embodiments of this application;
FIG. 7 is a schematic structural diagram of an adapter in an unfolded state according to some embodiments of this application;
FIG. 8 is a schematic diagram of assembly of an end cover assembly and an adapter according to some other embodiments of this application;
FIG. 9 is a schematic structural diagram of an adapter in an unfolded state according to some other embodiments of this application;
FIG. 10 is a schematic diagram of assembly of an end cover assembly and an adapter according to still some embodiments of this application;
FIG. 11 is a schematic structural diagram of an adapter in an unfolded state according to still some embodiments of this application;
FIG. 12 illustrates a schematic flowchart of a manufacturing method for a battery cell according to some embodiments of this application; and
FIG. 13 is a schematic block diagram of a manufacturing device for a battery cell according to some embodiments of this application.

In the accompanying drawings, the figures are not necessarily drawn to scale.

Reference signs: 100. battery; 10. box; 11. first portion; 12. second portion; 20. battery cell; 21. housing; 22. end cover assembly; 221. end cover; 222. electrode terminal; 223. pressure relief mechanism; 224. first insulating member; 2241. fourth through hole; 225. second insulating member; 23. electrode assembly; 231. body; 2311. end surface; 232. tab; 24. adapter; 241. first connection portion; 2411. second through hole; 2412. third through hole; 2413. fifth through hole; 242. second connection portion; 2421. first through hole; 243. third connection portion; 200. controller; 300. motor; and 1000. vehicle.

### DESCRIPTION OF EMBODIMENTS

The following further describes implementations of this application in detail with reference to the accompanying drawings and embodiments. The detailed description of the embodiments and the accompanying drawings are intended to illustrate the principle of this application rather than to limit the scope of this application, meaning this application is not limited to the embodiments described herein.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

The battery mentioned in this application is a single physical module that includes one or more battery cells for providing a higher voltage and capacity. For example, the battery mentioned in this application may include a battery module, a battery pack, or the like.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer, where the positive electrode active substance layer is applied onto a surface of the positive electrode current collector, and a part of the current collector uncoated with the positive electrode active substance layer serves as a positive tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer, where the negative electrode active substance layer is applied onto a surface of the negative electrode current collector, and a part of the current collector uncoated with the negative electrode active substance layer serves as a negative tab. The negative electrode current collector may be made of copper, and the negative electrode active substance may be carbon, silicon, or the like. To allow a high current to pass through without any fusing, multiple positive tabs are provided and stacked together, and multiple negative tabs are provided and stacked together. The separator may be made of PP (polypropylene), PE (polyethylene), or the like.

In this application, the electrode assembly includes a body coated with the active substance layer and a tab uncoated with the active substance layer, and the tab extends from an end portion of the body.

The battery cell further includes an end cover assembly and an adapter. The end cover assembly includes an end cover, an electrode terminal, and a pressure relief mechanism, where the electrode terminal and the pressure relief mechanism are disposed at the end cover. Typically, the adapter has a large length. Therefore, the adapter is folded during assembly of the battery cell.

The pressure relief mechanism is an element or part that is actuated when internal pressure or temperature of the battery cell reaches a threshold, so as to relieve the internal pressure or temperature. The pressure relief mechanism may be in a form of an explosion-proof valve, a gas valve, a pressure relief valve, a safety valve, or the like, and may specifically employ an element or part sensitive to pressure or temperature. To be specific, when the internal pressure or temperature of the battery cell reaches the threshold, the pressure relief mechanism performs an action or a weak structure provided in the pressure relief mechanism is destroyed, thereby forming an opening or a channel for relieving the internal pressure or temperature.

"Actuate" mentioned in this application means that the pressure relief mechanism is put into an action or is activated to a given state such that the internal pressure and temperature of the battery cell is relieved. The action that the pressure relief mechanism is put into may include but is not limited to: cracking, breaking, tearing, or opening at least part of the pressure relief mechanism. When the pressure relief mechanism is actuated, high-temperature and high-pressure substances inside the battery cell are discharged as emissions from an actuated site. In this way, the battery cell can relieve its pressure and temperature under controllable pressure or temperature, thereby avoiding more serious potential incidents.

For the development of battery technologies, many design factors need to be considered, for example, performance parameters such as energy density, discharge capacity, and charge and discharge rate, as well as reliability of the battery.

For a battery cell, there are many factors that affect the safety, for example, ambient temperature, component damage (such as tab cracking) caused by assembling, lithium precipitation, and delayed pressure relief.

The inventors have found that due to a large length of the adapter, during assembly, the adapter is folded so that the adapter includes the first connection portion, the second connection portion and the third connection portion that are sequentially folded along the thickness direction of the end cover, where the first connection portion is configured to be connected to the electrode assembly, the third connection portion is configured to be connected to the electrode terminal, and the second connection portion is connected to the first connection portion and the third connection portion; when a large amount of gas is produced by an electrochemical reaction taking place in the electrode assembly, the internal pressure of the battery cell increases, and the gas flows under the action of the internal pressure of the battery cell; and since the second connection portion covers the pressure relief mechanism and blocks the flowing of the gas, the gas needs to bypass the second connection portion to flow towards the pressure relief mechanism, resulting in poor flow smoothness of the gas, causing a failure of the pressure relief mechanism in relieving pressure in time, and even leading to explosion of the battery cell in severe cases, thereby resulting in low safety of the battery cell.

In view of this, to solve the problem that the pressure relief mechanism cannot relieve pressure in time because the adapter blocks the flowing of the gas, the inventors have designed a battery cell through in-depth research. The battery cell includes an end cover assembly and an adapter. The end cover assembly includes an end cover, an electrode terminal, and a pressure relief mechanism, where the electrode terminal and the pressure relief mechanism are both disposed at the end cover. The adapter is disposed at a side of the end cover facing the interior of the battery cell. The adapter includes a first connection portion, a second connection portion, and a third connection portion that are sequentially folded along a thickness direction of the end cover. The first connection portion is configured to be connected to an electrode assembly, the third connection portion is configured to be connected to the electrode terminal, and the second connection portion is connected to the first connection portion and the third connection portion, where the second connection portion is provided with a first through hole, and the first through hole is used for allowing gas inside the battery cell to pass through, so that the gas can flow to the pressure relief mechanism. The first through hole provided in the second connection portion improves the flow smoothness of the gas, facilitating smooth flowing of the gas to the pressure relief mechanism, thereby allowing the pressure relief mechanism to relieve pressure in time and improving the safety of the battery cell.

In such battery cell, when a large amount of gas is produced by an electrochemical reaction taking place in the electrode assembly, the gas moves towards the pressure relief mechanism under the action of internal pressure of the battery cell. Since the second connection portion is provided with a first through hole, the gas can pass through the second connection portion through the first through hole, reducing the obstruction of the second connection portion to the gas, so that the gas smoothly flows towards the pressure relief mechanism, facilitating timely pressure relief by the pressure relief mechanism, thereby improving the safety of the battery cell.

The battery cell disclosed in the embodiments of this application may be used without limitation in electric devices such as vehicles, ships, or aircrafts. The battery cell, battery, and the like disclosed in this application may be used to constitute a power supply system of such electric device.

An embodiment of this application provides an electric device that uses a battery as a power source. The electric device may be but is not limited to a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

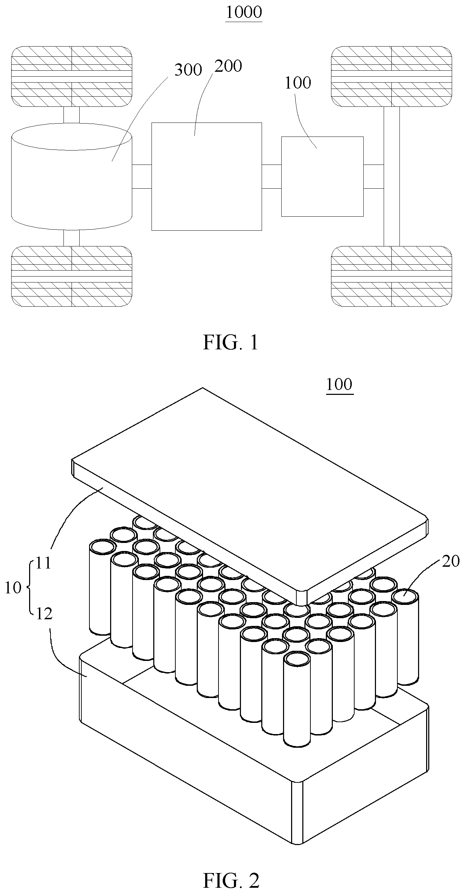

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define an accommodating space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12.

In the battery 100, multiple battery cells 20 may be provided, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety of the multiple battery cells 20 is accommodated in the box 10. Certainly, the battery 100 may alternatively be formed in a manner that multiple battery cells 20 are connected in series, parallel, or series-parallel first to form a battery module and then multiple battery modules are connected in series, parallel, or series-parallel to form an entirety which is accommodated in the box 10. The battery 100 may further include other structures. For example, the battery 100 may further include a busbar configured to implement electrical connection between the multiple battery cells 20.

Each battery cell 20 may be a secondary battery or a primary battery, or may be a lithium-sulfur battery, a sodium-ion battery, or a magnesium-ion battery, without being limited thereto. The battery cell 20 in these embodiments of this application are square.

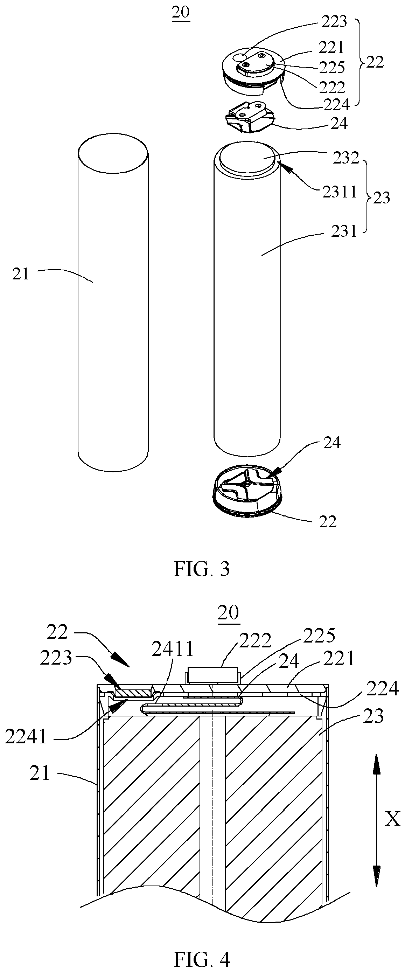

Referring to FIG. 3. FIG. 3 is a schematic structural exploded view of a battery cell 20 according to some embodiments of this application. The battery cell 20 refers to a smallest element constituting the battery 100. As shown in FIG. 3, the battery cell 20 includes a housing 21, an end cover assembly 22, an electrode assembly 23, and an adapter 24. The housing 21 has an opening. The end cover assembly 22 includes an end cover 221, an electrode terminal 222, and a pressure relief mechanism 223. The end cover 221 is configured to cover the opening so as to isolate an internal environment of the battery cell 20 from an external environment. The electrode terminal 222 is disposed at the end cover 221.

The housing 21 is an assembly configured to form the internal environment of the battery cell 20 together with the end cover 221, where the formed internal environment may be used for accommodating the electrode assembly 23, an electrolyte, and other components. The housing 21 and the end cover 221 may be independent components, and an opening may be provided in the housing 21, so that the end cover 221 can cover the opening to form the internal environment of the battery cell 20. The housing 21 may be in various shapes and sizes, such as a cuboid shape, a cylindrical shape, and a hexagonal prism shape. Specifically, the shape of the housing 21 may be determined based on a specific shape and size of the electrode assembly 23. The housing 21 may be made of various materials such as copper, iron, aluminum, stainless steel, aluminum alloy, and plastic. This is not particularly limited in the embodiments of this application. The housing 21 being a cylinder is used as an example for description in the embodiments of this application.

The end cover 221 refers to a component that covers the opening of the housing 21 to isolate the internal environment of the battery cell 20 from the external environment. The shape of the end cover 221 may be adapted to the shape of the housing 21 so as to fit the housing 21. Optionally, the end cover 221 may be made of a material with certain hardness and strength (for example, aluminum alloy), so that the end cover 221 is less likely to deform when subjected to extrusion and collision, allowing the battery cell 20 to have higher structural strength and improved safety performance. The electrode terminal 222 is disposed at the end cover 221, and the electrode terminal 222 may be configured to be electrically connected to the electrode assembly 23 for outputting or inputting electrical energy of the battery cell 20. The end cover 221 may also be made of various materials, such as copper, iron, aluminum, stainless steel, aluminum alloy, and plastic. This is not particularly limited in the embodiments of this application. In some embodiments, an insulating structure may also be provided at an inner side of the end cover 221, and the insulating structure may be configured to isolate an electrically connected component in the housing 21 from the end cover 221 so as to reduce the risk of short circuit. For example, the insulating structure may be plastic, rubber, or the like.

The pressure relief mechanism 223 is configured to relieve internal pressure when the internal pressure or temperature of the battery cell 20 reaches a threshold.

The electrode assembly 23 is a component in which electrochemical reactions take place in the battery cell 20. The housing 21 may include one or more electrode assemblies 23. The electrode assembly 23 is mainly formed by winding or stacking a positive electrode plate and a negative electrode plate, a separator is generally provided between the positive electrode plate and the negative electrode plate, and the separator is configured to isolate the positive electrode plate from the negative electrode plate in an insulating manner. Parts of the positive electrode plate and negative electrode plate coated with active substance layers constitute a body 231 of the electrode assembly 23, while parts of the positive electrode plate and negative electrode plate uncoated active substance layers each constitute a tab 232. A positive tab 232 and a negative tab 232 may both be located at one end of the body 231 or be located at two ends of the body 231, respectively. During charge and discharge of the battery, a positive electrode active substance and a negative electrode active substance react with an electrolyte, and the tabs 232 are connected to the electrode terminals 222 to form a current loop.

The adapter 24 is a component for connecting the electrode terminal 222 and the tab 232, and the adapter 24 implements an electrical connection between the electrode terminal 222 and the tab 232.

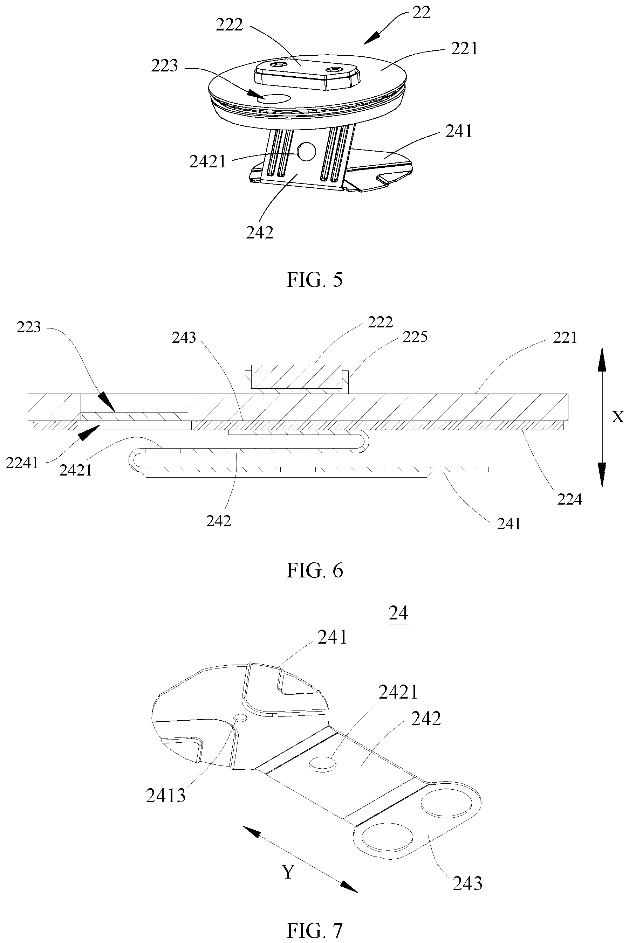

Referring to FIG. 4, FIG. 4 is a partial cross-sectional view of a battery cell 20 according to some embodiments of the present application. FIG. 5 is a schematic diagram of a connection state of an end cover assembly 22 and an adapter 24 according to some embodiments of this application. In FIG. 5, the adapter 24 is not completely folded to illustrate a first through hole 2421 of a second connection portion 242. FIG. 6 is a schematic diagram of assembly of an end cover assembly 22 and an adapter 24 according to some embodiments of this application. FIG. 7 is a schematic structural diagram of an adapter 24 in an unfolded state according to some embodiments of this application. According to some embodiments of this application, this application provides a battery cell 20. As shown in FIG. 3 to FIG. 7, the battery cell 20 includes an end cover assembly 22 and an adapter 24. The end cover assembly 22 includes an end cover 221, an electrode terminal 222, and a pressure relief mechanism 223, where the electrode terminal 222 and the pressure relief mechanism 223 are both disposed at the end cover 221. The adapter 24 is disposed at a side of the end cover 221 facing the interior of the battery cell 20. The adapter 24 includes a first connection portion 241, a second connection portion 242, and a third connection portion 243 that are sequentially folded along a thickness direction X of the end cover 221. The first connection portion 241 is configured to be connected to an electrode assembly 23, the third connection portion 243 is configured to be connected to the electrode terminal 222, and the second connection portion 242 is connected to the first connection portion 241 and the third connection portion 243. The second connection portion 242 is provided with a first through hole 2421, and the first through hole 2421 is used for allowing gas inside the battery cell 20 to pass through, so that the gas can flow to the pressure relief mechanism 223.

In the figure, a direction indicated by letter X is the thickness direction of the end cover 221. The first connection portion 241, the second connection portion 242, and the third connection portion 243 are sequentially folded along the thickness direction X, so as to reduce space occupied by the adapter 24 in the thickness direction X, thereby ensuring the energy density of the battery cell 20.

The pressure relief mechanism 223 is a component or part that is actuated when internal pressure or temperature of the battery cell 20 reaches a threshold, so as to relieve the internal pressure or temperature. The pressure relief mechanism 223 may be in a form of an explosion-proof valve, a gas valve, a pressure relief valve, a safety valve, or the like, and may specifically employ an element or part sensitive to pressure or temperature so as to be turned on when the internal pressure of the battery cell 20 reaches a threshold value. Alternatively, the pressure relief mechanism 223 may be a weak portion formed at the end cover 221. Further alternatively, the pressure relief mechanism 223 may be a valve plate connected to the end cover 221, and the pressure relief mechanism 223 is provided with a weak portion, so as to be torn when the internal pressure of the battery cell 20 reaches the threshold.

The adapter 24 is a component for implementing an electrical connection between the electrode terminal 222 and the electrode assembly 23. The adapter 24 may be a metal component (for example, aluminum, copper, or other conductive metals) with good electrical conductivity.

The first connection portion 241 may be welded to the electrode assembly 23 to ensure the connection stability between the first connection portion 241 and the electrode assembly 23. The third connection portion 243 may be welded to the electrode terminal 222 to ensure the connection stability between the third connection portion 243 and the electrode terminal 222.

The first through hole 2421 is a through hole provided in the second connection portion 242. The first through hole 2421 runs through the second connection portion 242 in a thickness direction of the second connection portion 242, so that two sides of the second connection portion 242 in the thickness direction are penetrated, allowing gas to pass through the second connection portion 242.

According to the battery cell 20 in these embodiments of this application, when a large amount of gas is produced by an electrochemical reaction taking place in the electrode assembly 23, the gas moves towards the pressure relief mechanism 223 under the action of internal pressure of the battery cell 20. Since the second connection portion 242 is provided with the first through hole 2421, the gas can pass through the second connection portion 242 through the first through hole 2421, reducing obstruction of the second connection portion 242 to the gas and allowing the gas to smoothly flow towards the pressure relief mechanism 223, thereby facilitating timely pressure relief by the pressure relief mechanism 223, and in turn improving the safety of the battery cell 20.

According to some embodiments of this application, in the thickness direction X, a projection of the pressure relief mechanism 223 on the second connection portion 242 covers at least part of the first through hole 2421.

That the projection of the pressure relief mechanism 223 on the second connection portion 242 covers at least part of the first through hole 2421 means the projection of the pressure relief mechanism 223 on the second connection portion 242 may partially overlap with the first through hole 2421, or the projection of the pressure relief mechanism 223 on the second connection portion 242 may cover the entire first through hole 2421. In other words, the first through hole 2421 is located within the projection of the pressure relief mechanism 223 on the second connection portion 242.

It should be noted that when the pressure relief mechanism is a pressure relief plate, the end cover 221 is provided with a pressure relief hole, the pressure relief plate covers the pressure relief hole, and that the projection of the pressure relief mechanism 223 on the second connection portion 242 covers at least part of the first through hole 2421 means the projection of the pressure relief hole on the second connection portion 242 covers at least part of the first through hole 2421.

The projection of the pressure relief mechanism 223 on the second connection portion 242 covers at least part of the first through hole 2421, so that the gas passing through the first through hole 2421 can quickly flow to the pressure relief mechanism 223, facilitating timely pressure relief by the pressure relief mechanism 223.

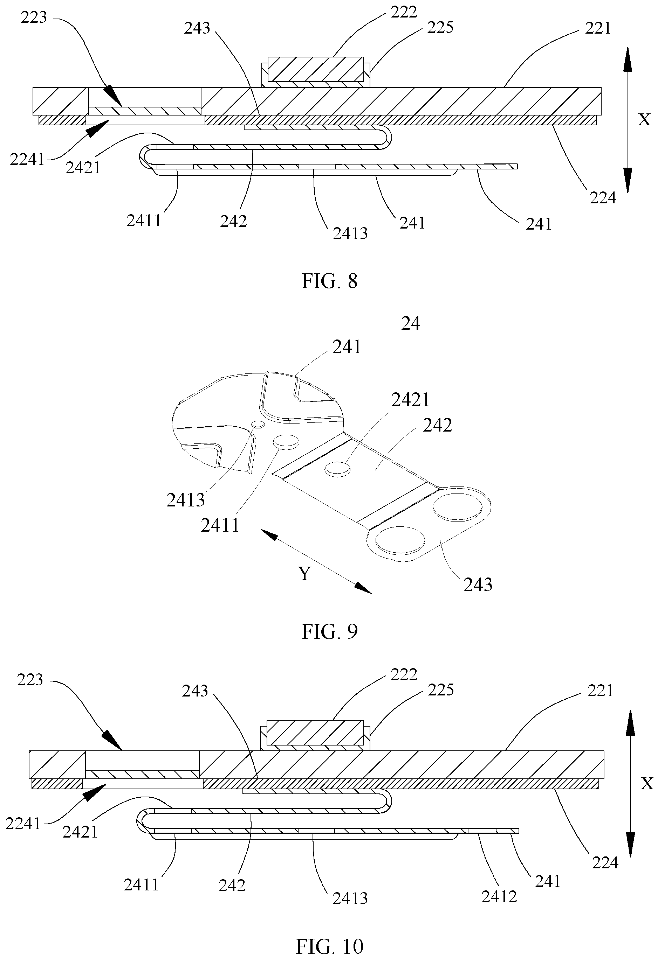

Referring to FIG. 8 and FIG. 9, FIG. 8 is a schematic diagram of assembly of an end cover assembly 22 and an adapter 24 according to some other embodiments of this application, and FIG. 9 is a schematic structural diagram of an adapter 24 in an unfolded state according to some other embodiments of this application. According to some embodiments of this application, the first connection portion 241 is provided with a second through hole 2411, and the second through hole 2411 is used for allowing gas inside the battery cell 20 to pass through, so that the gas can flow to the first through hole 2421.

The second through hole 2411 is a through hole provided in the first connection portion 241. The second through hole 2411 runs through the first connection portion 241 in a thickness direction of the first connection portion 241.

The second through hole 2411 provided in the first connection portion 241 facilitates passing of the gas produced by the electrochemical reaction in the electrode assembly 23 through the first connection portion 241, reducing the obstruction of the first connection portion 241 to the gas and improving the flowing smoothness of the gas.

According to some embodiments of this application, in the thickness direction X, projections of the first through hole 2421 and second through hole 2411 on the end cover 221 at least partially overlap.

That the projections of the first through hole 2421 and second through hole 2411 on the end cover 221 at least partially overlap means the projection of the first through hole 2421 on the end cover 221 and the projection of the second through hole 2411 on the end cover 221 may partially overlap, or the projection of the first through hole 2421 on the end cover 221 and the projection of the second through hole 2411 on the end cover 221 may completely overlap. When the projection of the first through hole 2421 on the end cover 221 and the projection of the second through hole 2411 on the end cover 221 completely overlap, an area and contour of the projection of the first through hole 2421 on the end cover 221 may be the same as an area and contour of the projection of the second through hole 2411 on the end cover 221. Alternatively, the projection of the second through hole 2411 on the end cover 221 is located within the projection of the first through hole 2421 on the end cover 221.

It should be noted that when a large amount of gas is produced by an electrochemical reaction taking place in the electrode assembly 23, pressure inside the battery cell 20 increases, and a tab 232 of the electrode assembly 23 may be driven by the gas to fill the second through hole 2411 and protrude from the second through hole 2411. However, since the pressure relief mechanism 223 and the second through hole 2411 are disposed at two sides of the second connection portion 242, even if the tab 232 protrudes from the second through hole 2411, and the protruding part of the tab 232 is also obstructed by the second connection portion 242, so that the tab 232 is prevented from blocking the pressure relief mechanism 223.

The projections of the first through hole 2421 and second through hole 2411 on the end cover 221 at least partially overlap, allowing the gas produced in the electrode assembly 23 to quickly flow to the pressure relief mechanism 223.

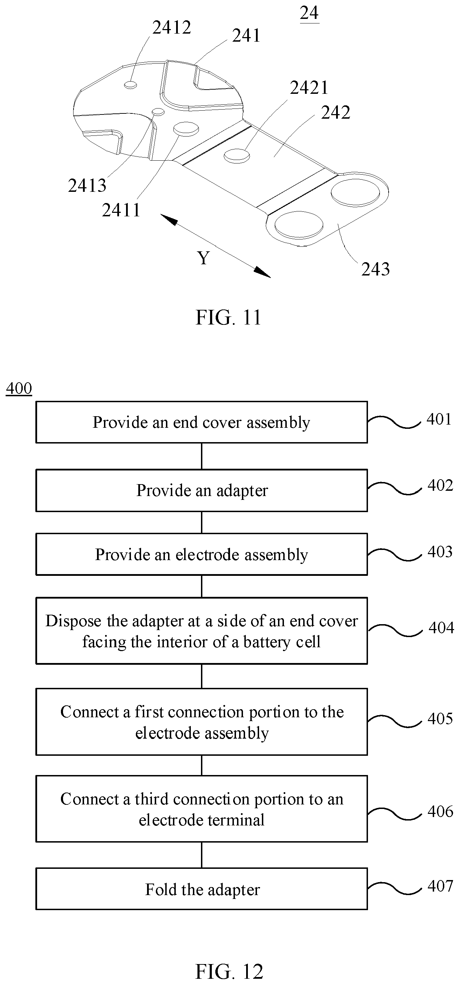

Referring to FIG. 10 and FIG. 11, FIG. 10 is a schematic diagram of assembly of an end cover assembly 22 and an adapter 24 according to still some embodiments of this application, and FIG. 11 is a schematic structural diagram of an adapter 24 in an unfolded state according to still some embodiments of this application. According to some embodiments of this application, the first connection portion 241 is further provided with a third through hole 2412, and the third through hole 2412 is used for allowing gas inside the battery cell 20 to pass through, so that the gas can flow to the first through hole 2421. In the thickness direction X, the projections of the third through hole 2412 and first through hole 2421 does not overlap.

The third through hole 2412 is a through hole provided in the first connection portion 241, and the third through hole 2412 also runs through the first connection portion 241 in the thickness direction of the first connection portion 241. The provision of the third through hole 2412 allows the first connection portion 241 to have multiple regions running through two sides of the first connection portion 241, so that the gas can quickly pass through the first connection portion 241.

The third through hole 2412 provided in the first connection portion 241 further reduces the obstruction of the first connection portion 241 to the gas produced in the electrode assembly, improving the smoothness of the gas passing through the first connection portion 241, and allowing the gas to quickly flow to the pressure relief mechanism 223.

According to some embodiments of this application, as shown in FIG. 11, when the adapter 24 is in an unfolded state, the third through hole 2412 and the second through hole 2411 are located at two ends of the first connection portion 241 in a length direction Y of the adapter 24.

When the adapter 24 is in an unfolded state, the adapter 24 has a certain length, and the first connection portion 241, the second connection portion 242, and the third connection portion 243 are sequentially distributed along the length direction Y of the adapter 24.

As shown in FIG. 7 to FIG. 11, a middle portion of the first connection portion 241 is provided with a fifth through hole 2413, the fifth through hole 2413 is used to correspondingly position a winding center of the electrode assembly 23 during assembly of the battery cell 20. In addition, when an electrolyte is injected into the battery cell 20, rapid flowing of the electrolyte to the electrode assembly 23 is facilitated. The third through hole 2412 and the second through hole 2411 are located at the two ends of the first connection portion 241 in the length direction Y of the adapter 24, which may mean that the third through hole 2412 and the second through hole 2411 are symmetrically distributed along a central axis of the fifth through hole 2413. In other words, a distance from the third through hole 2412 to the central axis of the fifth through hole 2413 may be equal to a distance from the second through hole 2411 to the central axis of the fifth through hole 2413.

The third through hole 2412 and the second through hole 2411 are located at the two ends of the first connection portion 241 in the length direction Y of the adapter 24, ensuring that the first connection portion 241 is evenly stressed when the gas produced by the electrochemical reaction in the electrode assembly 23 flows through the first connection portion 241.

According to some embodiments of this application, as shown in FIG. 3, in the thickness direction X, a projection of the first connection portion 241 on the end cover 221 is within a projection of the electrode assembly 23 on the end cover 221.

The electrode assembly 23 includes a body 231 coated with an active substance layer and a tab 232 uncoated with the active substance layer. The tab 232 extends from an end surface 2311 of the body 231 in the thickness direction X, and the tab 232 is connected to the first connection portion 241. The end surface 2311 is a surface of the tab 232 extending out of the body 231. The end surface 2311 is configured to face the end cover 221, thereby facilitating connection between the tab 232 and the adapter 24.

The projection of the first connection portion 241 on the end cover 221 is within the projection of the electrode assembly 23 on the end cover 221, which may mean that an area of the projection of the first connection portion 241 on the end cover 221 is less than an area of the projection of the electrode assembly 23 on the end cover 221. Optionally, the projection of the first connection portion 241 on the end cover 221 is within a projection of the end surface 23 11 on the end cover 221.

The projection of the first connection portion 241 on the end cover 221 is within the projection of the electrode assembly 23 on the end cover 221, so that the first connection portion 241 does not shield the entire end surface 2311, allowing the gas produced in the electrode assembly 23 to flow to the pressure relief mechanism 223 in a region where the first connection portion 241 does not cover the end surface 23 11, thereby reducing the obstruction of the first connection portion 241 to the gas.

According to some embodiments of this application, the first connection portion 241, the second connection portion 242, and the third connection portion 243 are integrally formed.

The first connection portion 241, the second connection portion 242, and the third connection portion 243 are integrally formed. In other words, the adapter 24 is integrally formed, and during the assembly of the battery cell 20, the adapter 24 is folded to form the first connection portion 241, the second connection portion 242, and the third connection portion 243 that are sequentially folded along the thickness direction X. A direction in which the first connection portion 241 is folded with respect to the second connection portion 242 is opposite to a direction in which the third connection portion 243 is folded with respect to the second connection portion 242, so that the first connection portion 241 and the third connection portion 243 are located at two sides of the second connection portion 242 in the thickness direction X.

The adapter 24 is integrally formed, and the adapter 24 is folded to form the first connection portion 241, the second connection portion 242, and the third connection portion 243, ensuring the overall strength of the adapter 24.

According to some embodiments of this application, as shown in FIG. 3 and FIG. 4, the end cover assembly 22 further includes a first insulating member 224. The first insulating member 224 is disposed at a side of the end cover 221 facing the interior of the battery cell 20, the first insulating member 224 is configured to isolate the end cover 221 from the adapter 24 in an insulating manner, and the first insulating member 224 is provided with a fourth through hole 2241. In the thickness direction X, a projection of the fourth through hole 2241 on the end cover 221 at least partially overlaps with the pressure relief mechanism 223, and a projection of the fourth through hole 2241 on the second connection portion 242 at least partially overlaps with the first through hole 2421.

The first insulating member 224 is an electrically insulating component. For example, the first insulating member 224 may be rubber, or plastic (such as PET (polyethylene terephthalate), PP (polypropylene), and the like).

The first insulating member 224 is disposed at the side of the end cover 221 facing the interior of the battery cell 20 to separate the end cover 221 from the adapter 24, avoiding short circuit caused by contact between the end cover 221 and the adapter 24, thereby improving the safety of the battery cell 20. The projection of the fourth through hole 2241 on the end cover 221 at least partially overlaps with the pressure relief mechanism 223, and the projection of the fourth through hole 2241 on the second connection portion 242 at least partially overlaps with the first through hole, allowing the gas to flow smoothly towards the pressure relief mechanism 223.

According to some embodiments of this application, in an embodiment in which the end cover 221 is energized, to avoid short circuit caused by contact between the electrode terminal 222 and the end cover 221, the battery cell 20 may further include a second insulating member 225, where the second insulating member 225 is disposed between the end cover 221 and the electrode terminal 222, so as to isolate the end cover 221 from the electrode terminal 222 in an insulating manner.

The second insulating member 225 is an electrically insulating component. For example, the second insulating member 225 may be rubber, or plastic (such as PET (polyethylene terephthalate), PP (polypropylene), and the like).

According to some embodiments of this application, this application further provides a battery 100 including the battery cell 20 described in any one of the foregoing solutions.

According to some embodiments of this application, this application further provides an electric device including the battery cell 20 described in any one of the foregoing solutions, where the battery cell 20 is configured to supply electrical energy to the electric device.

The electric device may be any one of the foregoing devices or systems using the battery cell 20.

According to some embodiments of this application, referring to FIG. 3 to FIG. 11, this application provides a cylindrical battery cell 20, where the battery cell 20 includes a housing 21, an end cover assembly 22, an electrode assembly 23, and an adapter 24. The housing 21 has an opening. The end cover assembly 22 includes an end cover 221, an electrode terminal 222, and a pressure relief mechanism 223. The end cover 221 covers the opening, and the electrode terminal 222 and the pressure relief mechanism 223 are disposed at the end cover 221. The electrode assembly 23 is disposed inside the housing 21, the electrode assembly 23 includes a body 231 coated with an active substance layer and a tab 232 uncoated with the active substance layer, and the tab 232 extends from an end surface 2311 of the body 231 in the thickness direction X. The adapter 24 includes a first connection portion 241, a second connection portion 242, and a third connection portion 243 that are sequentially folded along a thickness direction X. The first connection portion 241 is electrically connected to the tab 232 of the electrode assembly 23, the third connection portion 243 is electrically connected to the electrode terminal 222, and the second connection portion 242 is connected to the first connection portion 241 and the third connection portion 243. The second connection portion 242 is provided with a first through hole 2421. In the thickness direction X, a projection of the pressure relief mechanism 223 on the second connection portion 242 covers at least part of the first through hole 2421. The first through hole 2421 is used for allowing gas inside the battery cell 20 to pass through, so that the gas can flow to the pressure relief mechanism 223.

The battery cell 20 can reduce the obstruction of the second connection portion 242 to the gas and facilitates improvement of flowing smoothness of the gas, so that the gas can quickly flow to the pressure relief mechanism 223, facilitating timely pressure relief of the pressure relief structure, thereby improving the safety of the battery cell 20.

The foregoing describes the battery cell 20, battery, and electric device of the embodiments of this application; and the following describes a manufacturing method and a manufacturing device for the battery cell 20 of the embodiments of this application. For those not described in detail, refer to the foregoing embodiments.

FIG. 12 illustrates a schematic flowchart of a manufacturing method 400 for a battery cell according to some embodiments of this application. As shown in FIG. 12, the manufacturing method 400 for the battery cell may include the following steps.

401. Provide an end cover assembly 22, where the end cover assembly 22 includes an end cover 221, an electrode terminal 222, and a pressure relief mechanism 223, and the electrode terminal 222 and the pressure relief mechanism 223 are both disposed at the end cover 221.

402. Provide an adapter 24, where the adapter 24 includes a first connection portion 241, a second connection portion 242, and a third connection portion 243, the second connection portion 242 is connected to the first connection portion 241 and the third connection portion 243, the second connection portion 242 is provided with a first through hole 2421, and the first through hole 2421 is used for allowing gas inside the battery cell 20 to pass through, so that the gas can flow to the pressure relief mechanism 223.

403. Provide an electrode assembly 23.

404. Dispose the adapter 24 at a side of the end cover 221 facing the interior of the battery cell 20.

405. Connect the first connection portion 241 to the electrode assembly 23.

406. Connect the third connection portion 243 to the electrode terminal 222.

407. Fold the adapter 24, so that the first connection portion 241, the second connection portion 242, and the third connection portion 243 are sequentially folded along a thickness direction X of the end cover 221.

It should be noted that the order of the above steps is not fixed and can be adjusted according to actual situations. For example, the step "401. Provide an end cover assembly 22", the step "402. Provide an adapter 24", the step "404. Dispose the adapter 24 at a side of the end cover 221 facing the interior of the battery cell 20", the step "406. Connect the third connection portion 243 to the electrode terminal 222", the step "403. Provide an electrode assembly 23", the step "405. Connect the first connection portion 241 to the electrode assembly 23", and the step "407. Fold the adapter 24" may be sequentially performed. For another example, the step "403. Provide an electrode assembly 23", the step "401. Provide an end cover assembly 22", the step "402. Provide an adapter 24", the step "404. Dispose the adapter 24 at a side of the end cover 221 facing the interior of the battery cell 20", the step "405. Connect the first connection portion 241 to the electrode assembly 23", the step "406. Connect the third connection portion 243 to the electrode terminal 222", and the step "407. Fold the adapter 24" may be sequentially performed.

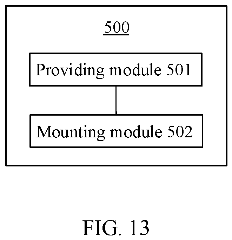

FIG. 13 is a schematic block diagram of a manufacturing device 500 for a battery cell according to some embodiments of this application. As shown in FIG. 13, the manufacturing device 500 for the battery cell may include: a providing module 501 and a mounting module 502.

The providing module 501 is configured to provide an end cover assembly 22, where the end cover assembly 22 includes an end cover 221, an electrode terminal 222, and a pressure relief mechanism 223, and the electrode terminal 222 and the pressure relief mechanism 223 are both disposed at the end cover 221; provide an adapter 24, where the adapter 24 includes a first connection portion 241, a second connection portion 242, and a third connection portion 243, the second connection portion 242 is connected to the first connection portion 241 and the third connection portion 243, the second connection portion 242 is provided with a first through hole 2421, and the first through hole 2421 is used for allowing gas inside the battery cell 20 to pass through, so that the gas can flow to the pressure relief mechanism 223; and provide an electrode assembly 23.

The mounting module 502 is configured to: dispose the adapter 24 at a side of the end cover 221 facing the interior of the battery cell 20; connect the first connection portion 241 to the electrode assembly 23; connect the third connection portion 243 to the electrode terminal 222; and fold the adapter 24, so that the first connection portion 241, the second connection portion 242, and the third connection portion 243 are sequentially folded along a thickness direction X of the end cover 221.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A battery cell, comprising:
an end cover assembly, comprising an end cover, an electrode terminal, and a pressure relief mechanism, wherein the electrode terminal and the pressure relief mechanism are both disposed at the end cover; and
an adapter, disposed at a side of the end cover facing the interior of the battery cell, wherein the adapter comprises a first connection portion, a second connection portion, and a third connection portion that are sequentially folded along a thickness direction of the end cover, the first connection portion is configured to be connected to an electrode assembly, the third connection portion is configured to be connected to the electrode terminal, and the second connection portion is connected to the first connection portion and the third connection portion;
wherein the second connection portion is provided with a first through hole, and the first through hole is used for allowing gas inside the battery cell to pass through, so that the gas is capable of flowing to the pressure relief mechanism.

2. The battery cell according to claim 1, wherein in the thickness direction, a projection of the pressure relief mechanism on the second connection portion covers at least part of the first through hole.

3. The battery cell according to claim 1 or 2, wherein the first connection portion is provided with a second through hole, and the second through hole is used for allowing gas inside the battery cell to pass through, so that the gas is capable of flowing to the first through hole.

4. The battery cell according to claim 3, wherein in the thickness direction, projections of the first through hole and second through hole on the end cover at least partially overlap.

5. The battery cell according to claim 3 or 4, wherein the first connection portion is further provided with a third through hole; the third through hole is used for allowing gas inside the battery cell to pass through, so that the gas is capable of flowing to the first through hole; and in the thickness direction, projections of the third through hole and first through hole do not overlap.

6. The battery cell according to claim 5, wherein when the adapter is in an unfolded state, the third through hole and the second through hole are located at two ends of the first connection portion in a length direction of the adapter.

7. The battery cell according to any one of claims 1 to 6, wherein in the thickness direction, a projection of the first connection portion on the end cover is within a projection of the electrode assembly on the end cover.

8. The battery cell according to any one of claims 1 to 7, wherein the first connection portion, the second connection portion, and the third connection portion are integrally formed.

9. The battery cell according to any one of claims 1 to 8, wherein the end cover assembly further comprises a first insulating member; the first insulating member is disposed at a side of the end cover facing the interior of the battery cell; the first insulating member is configured to isolate the end cover from the adapter in an insulating manner; the first insulating member is provided with a fourth through hole; and in the thickness direction, a projection of the fourth through hole on the end cover at least partially overlaps with the pressure relief mechanism, and a projection of the fourth through hole on the second connection portion at least partially overlaps with the first through hole.

10. A battery, comprising the battery cell according to any one of claims 1 to 9.

11. An electric device, comprising the battery cell according to any one of claims 1 to 9.
